# EUROPEAN PATENT APPLICATION

(11) **EP 1 683 658 A2**
(43) Date of publication of application: **26.07.2006**
(21) Application number: 06100476.8
(22) Date of filing: 17.01.2006
(51) Int. Cl.: B60C 25/00

(54) **Clamping apparatus**

(30) Priority: 19.01.2005 IT MO20050009
(71) Applicant: Ferrari, Gino, 42015 Correggio (RE) (IT); Maioli, Franco, 42015 Correggio (Reggio Emilia) (IT)
(72) Inventor: Ferrari, Gino, 42015 Correggio (RE) (IT); Maioli, Franco, 42015 Correggio (Reggio Emilia) (IT)

(57) **Abstract**

The clamping apparatus (2) comprises a resting plane for resting bodies to be clamped; clamping members (3), alternatively slidable all together on said plane between a clamping position and a release position; conducting means (4) of said clamping members (3) said conducting means (4) comprising: a common rotating element (5) rotating alternatively in two opposite directions and engaged with said clamping members (3); rotating drive means (6) connected to said common rotating element (5).

## Description

The invention relates to a clamping apparatus, particularly suitable for clamping vehicle wheels onto platforms of tyre-removing machines rotating around generally vertical axes. In known tyre-removing machines, the platform is provided with clamping members, for clamping the rims of the wheels, from or onto which rims the tyre fitters have to fit or remove a tyre.

The clamping members comprise a first pair of jaws and a second pair of opposite jaws that engage respective sliding paths of the platform, the paths being perpendicular to one another so as to converge on the centre of the platform.

Each jaw of the first pair of opposite jaws has a first pivot engaged by a stem of a pneumatic cylinder having a respective liner hinged on a base.

On each first pivot an end of a first connecting rod is hinged, having the other end hinged to an intermediate body arranged below the platform and free to rotate around the rotation axis of the platform, remaining parallel to the latter.

On the other hand, each jaw of the second pair of opposite jaws has a second pivot connected to the intermediate body by means of a second connecting rod.

The arrangement is such that, when the pneumatic cylinders are driven and the intermediate body is thus rotated by a certain angular sector, the jaws of the first and of the second pair of jaws are driven along the respective paths, all moving to the inside or the outside of the platform together.

This prior art nevertheless has a series of drawbacks.

A first drawback is that the hinges with which are connected together the intermediate body, the connecting rods and the jaws tend, with intense use over time, to acquire play that over time causes progressively increasing shifting between the first pair of jaws and the second pair of jaws along the respective sliding paths.

A second drawback is that the elements that are used to transform the linear motion of the cylinders into alternating clamping or release movement of the first pair of jaws and of the second pair of jaws are numerous and this affects the production costs of tyre-removing machines.

A third drawback is that, as only the first pair of jaws is driven directly by the actuators whereas the other pair of jaws is driven indirectly by means of the connection to the intermediate body with the respective connecting rods, a noticeable difference is created between the clamping force of the first pair of jaws and that of the second pair of jaws; this may cause undesired and dangerous shifts of the rims of the wheels on the platforms during operations of fitting or removing tyres, because of imperfect clamping of the rims.

An object of the present invention is to improve the prior art.

A further object of the invention is to make a clamping apparatus that has a simplified structure with respect to the known apparatuses.

Another object of the invention is to make a clamping apparatus that consistently reduces the play between the elements that make it up.

Another object of the invention is to make a clamping apparatus that enables the clamping force to be distributed uniformly between all the members arranged for clamping.

According to an aspect of the invention there is provided a clamping apparatus, comprising a resting plane for resting bodies to be clamped; clamping members, alternatively slidable all together on said plane between a clamping position and a release position; conducting means of said clamping members characterised in that said conducting means comprises: a common element rotating alternatively in two opposite directions and engaged with said clamping members; rotating driving means connected to said common rotating element.

According to another aspect of the invention, there is provided a clamping apparatus comprising a resting plane for resting bodies to be clamped; clamping members, alternatively slidable all together on said plane between a clamping position and a release position; conducting means of said clamping members characterised in that said conducting means comprises respective single actuating means for each clamping member of said clamping members.

The clamping apparatus according to the aspects of the invention thus enables the force provided by driving conducting means to be transmitted in a substantially equal manner to the members arranged for clamping, simplifying in a noticeable manner the structure of a machine provided with the clamping apparatus, for example a tyre-removing machine, and reducing in a significant manner the play between the clamping members and the respective driving conducting means.

Further features and advantages of the invention will be clearer from the detailed disclosure of a clamping apparatus, illustrated by way of non-limitative example in the attached tables of drawings, in which:
Figure 1 shows from above a platform of a tyre-removing machine provided with a clamping apparatus in a non-active release configuration;
Figure 2 is a section view of a portion of the platform in Figure 1 provided with the clamping apparatus, taken along a cross section II-II;
Figure 3 is a side view of a platform in Figure 1;
Figure 4 shows from above the platform in Figure 1 in an active clamping configuration;
Figure 5 is a section view of a portion of the platform in Figure 4 provided with the clamping apparatus, taken along a cross section V-V in Figure 4;
Figure 6 is the corresponding side view of the platform in Figure 4;

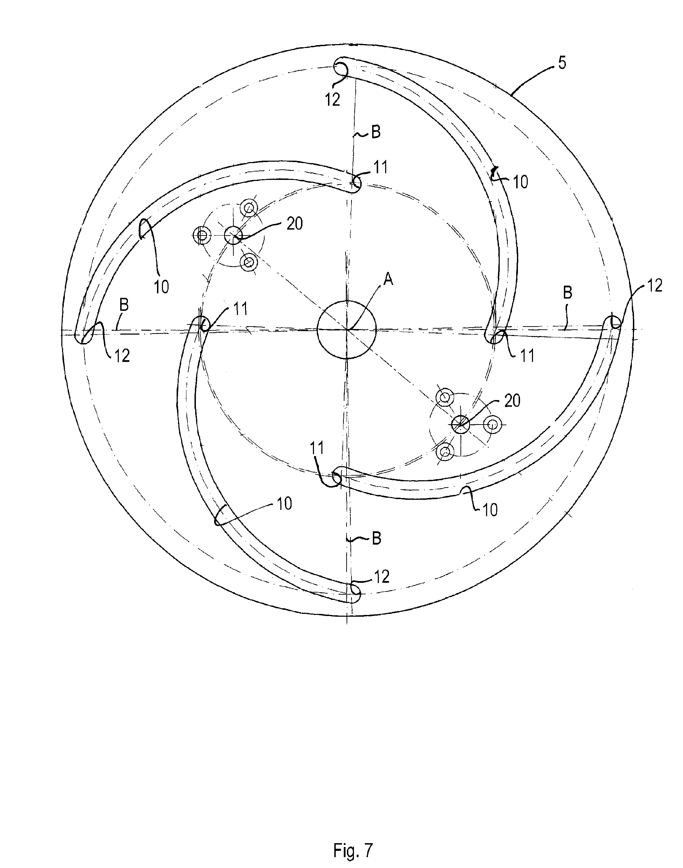

Figure 7 is a view from above of a common rotating element placed below the Figure 1;
Figure 8 is a schematic plan view of a clamping system in a second possible embodiment.

With reference to the Figures, 1 indicates a platform of a tyre-removing machine that forms a resting plane of bodies to be clamped, in the case in point, vehicle wheels.

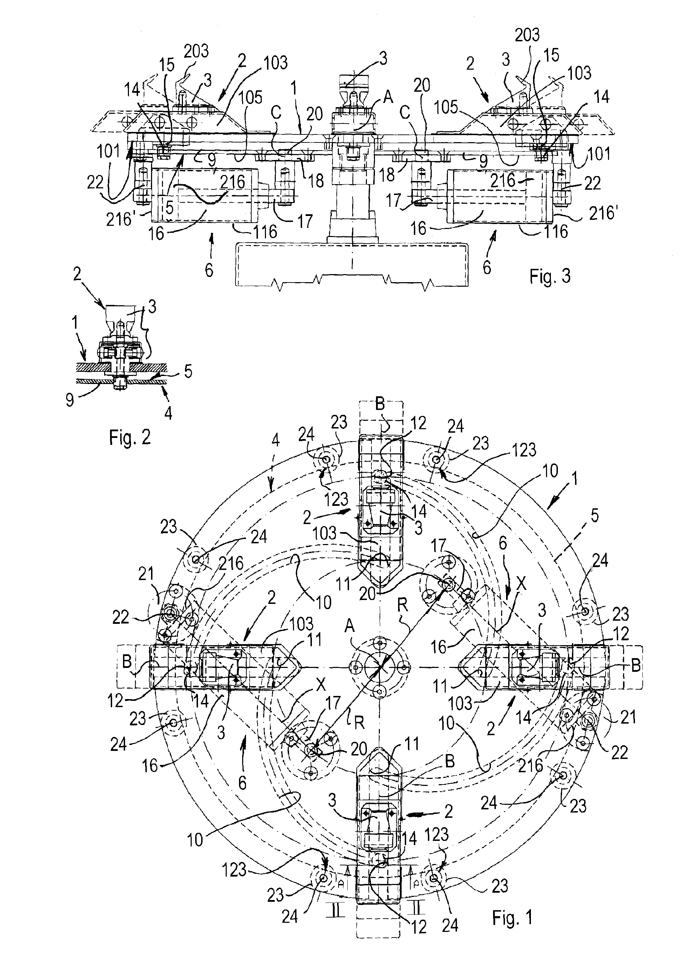

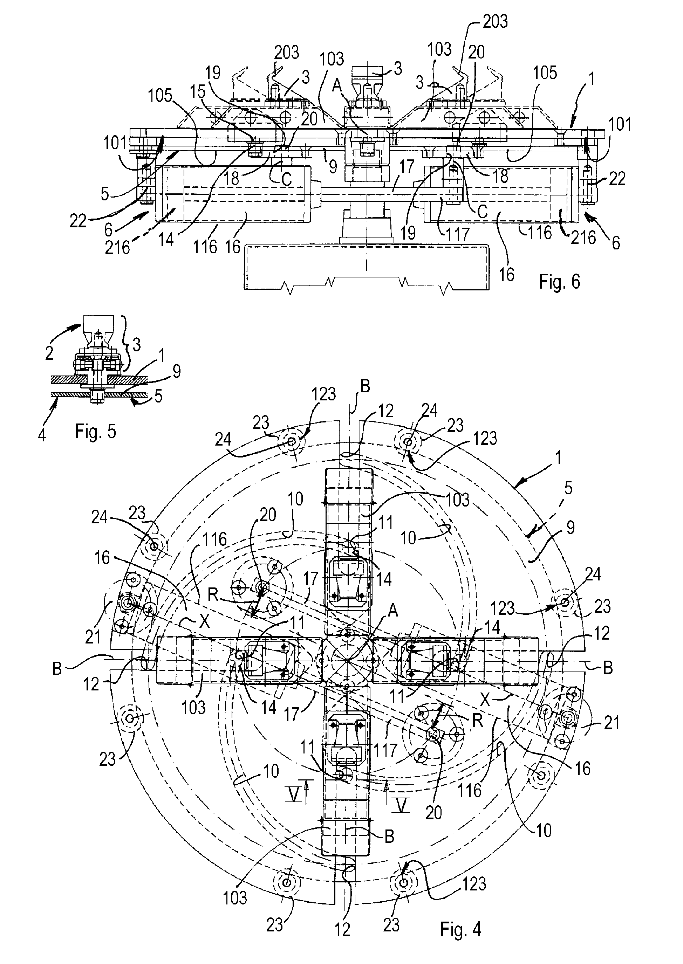

The platform 1 is provided with a clamping apparatus 2 that comprises, in addition to the resting plane for resting bodies to be clamped, i.e. the platform 1, clamping members 3 that are slidably mounted on the platform 1, alternatively between a clamping position illustrated in Figure 4 and a release position illustrated in Figure 1.

Each of the clamping members 3 is driven slidingly with respective conducting means 4, which comprises a common rotating element 5 that is engaged with each clamping member 3 and is arranged to move the clamping members 3 all together in combined directions.

The clamping apparatus 2 further comprises driving means 6 that, according to a first embodiment, is connected to the common rotating element 5so as to rotate it alternatively in one direction or in an opposite direction.

The resting plane, which in the case in point coincides with the platform 1, is provided with guide means 7 for guiding the clamping members 3 during their sliding.

The guide means 7 comprises four rectilinear grooves 8, that are arranged as a cross and are perpendicular to one another, obtained in the platforms 1; the grooves 8 have respective open ends facing the outside of the platform 1 and opposite closed ends facing the centre of the platform 1.

The longitudinal axes "B" of the grooves 8 intersect at an intersecting point that substantially coincides with the rotation axis of the platform 1. In each of the grooves 8 a guided clamping member 3 slides.

The common rotating element 5 comprises a flat body 9, having a disc shape, that is arranged with a rotation axis "A" that is perpendicular to the platform 1 and is coaxial with the rotation axis of the latter; the flat body 9 is placed below the platform 1, parallel to the latter.

In the flat body 9 four through slots 10 are obtained that are arc shaped with the convex parts facing the outside of the flat body 9 and which have first ends 11 and second ends 12, both closed and arranged so as to have the first ends 11 converging on the rotation axis "A" and the second ends 12 diverging from the latter, facing the outside of the flat body 9.

The arrangement of the slots 10, observing the flat body 9 from a direction orthogonal to the latter, is such that each first end 11 of a slot 10 is substantially aligned on each second end 12 of a contiguous slot 10; the line of alignment between each first end 11 of a through slot 10 and second end 12 of a contiguous through slot 10 is radial with respect to the rotation axis "A", and coincides with a longitudinal axis "B" of a groove 8.

The clamping members 3 comprise, in the embodiment of the clamping apparatus 2 intended to be used in the platforms 1 of tyre-removing machines, corresponding jaws or hooks 203 that are mounted on slide bases 103 which are provided with engaging means 13 slidable inside through slots 10.

The engaging means 13 comprises, for each clamping member 3, a freely rotating roller 14 that is splined coaxial on a support pivot 15 that extends from a lower end of each clamping member 3, precisely from the slide base 103, and which has a length that is such as to keep each roller 14 engaged inside a respective through slot 10, arranged to slide inside the latter during rotation of the flat body 9.

The driving means 6 comprises a pair of hydraulic cylinders 16 that comprises respective liners 116 inside which corresponding pistons 216 slide, the pistons 216 being provided with stems 17 extending outside.

The liners 116 are hinged on the lower face 101 of the platform 1 and have longitudinal axes "X" parallel to one another and to the platform 1; the axes "X" define with respect to the rotation axis "A" respective lever arms "R" that have lengths that vary according to the position of the clamping members 3, as visible in the Figures 1, in which the length of the lever arms "R" is maximum, and in Figure 4 in which the length of the lever arms "R" is reduced.

The stems 17 have ends 117 facing outside that are coupled to the flat element 5, more precisely to a lower face 105 of the latter, by means of respective flanges 18 clamped on the latter, for example through screw means.

The flanges 18 have, centrally, respective hollow seats 19 in which they are received, with the possibility of rotating hinge pivots 20 fixed to the ends 117 around corresponding hinge axes perpendicular to the flat element 5.

In the same way the liners 116 of the cylinders 16 are connected to the lower face 101, i.e. by respective second flanges 21 fixed to the latter by screw means.

From the liners 116, more precisely from the faces 216' of the latter facing outside with respect to the rotation axis "A", respective second pivots 22 protrude that have their ends facing the second flanges 21 received in central seats obtained in the latter.

The flat element 5 is supported rotating, and is splined on the same rotation axis of the platform 1, so as to be rotatable independently of the latter.

A peripheral edge of the flat element 5 is in turn supported on the lower face 101 of the platform 1 by means of a plurality of second rollers 23 that are grooved perimeterally and free to rotate around respective third rotating pivots 24 perpendicular to the platform 1, that extend from the lower face 101 of the latter and are fixed to it.

The peripheral edge of the flat element 5 engages the inside of all the grooves 123 of all the rollers 23 which are distributed along the perimeter of the platform 1.

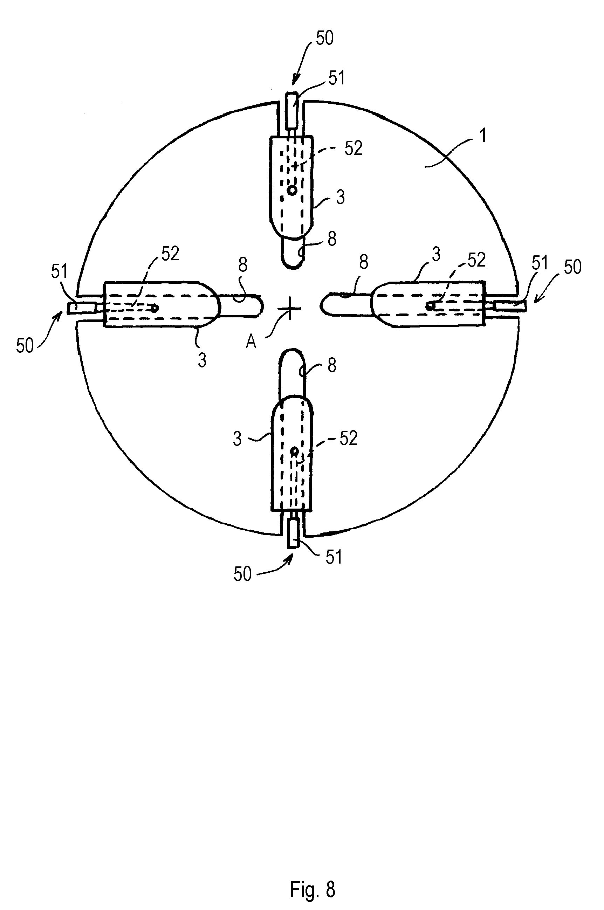

In the second possible embodiment of the clamping apparatus 2 illustrated in Figure 8, the jaws or hooks 203 are completely identical to those illustrated in the first embodiment; also the platform 1 is the same and the grooves 8 are obtained therein in which the jaws or hooks 203 are slidable.

The latter receive thesliding movement from respective conducting means 50, each of which drives on its own a respective jaw or hook 203.

The conducting means 50 comprises, in this alternative embodiment of the clamping apparatus 2, hydraulic cylinders 51 that have respective pistons 52 having corresponding free ends hinged on the respective jaws or hooks 203.

The hydraulic cylinders 51 are arranged to move all together, and for greater precision, they may be of the type with micrometric-stroke pistons.

Operation of the clamping apparatus 2 is then indicated by referring, merely by way of example, to mounting thereof on a platform 1 of a tyre-removing machine, for clamping on the latter, or releasing therefrom, the hubs of vehicle wheels that have to be subjected to operations of mounting or removing of tyres.

An operator, by means of a suitable control of conventional type provided on the tyre-removing machine, drives the hydraulic cylinders 16 so that the latter are arranged in a configuration in which the stems 17 are completely retracted inside the respective liners 116.

In this configuration, which is shown in Figure 1, the clamping members 3 are completely divaricated from one another: the flat body 9 is rotated so that the rollers 14 of each clamping member 3, engaging the respective through slot 10, is pushed by the progressive sliding of the latter thereupon to the second end 12 facing the outside, which is the furthest with respect to the rotation axis "A".

In this configuration, the operator can therefore rest a wheel to be clamped between the clamping members 3 and, then, successively control the hydraulic cylinders 16 so that the latter extend progressively, expelling the stems 17 from the liners 116.

The thrust exerted by the hydraulic cylinders 16 generates torque of opposing forces that, multiplied by the respective lever arms "R", rotate the flat body 9.

The flat body 9, by rotating, causes the simultaneous slide of all the slots 10 on the respective rollers 14 that are recalled to the first ends 11 of the latter facing and converging on the rotation axis "A": this configuration is shown in Figure 4.

The rollers 14, through the support pivots 15, transmit to the respective clamping members 3, on which they are mounted and from which they extend, the thrust directed to the rotation axis "A" received by the through slots 10; this causes the simultaneous sliding of all the clamping members 3 along the respective grooves 8 to the rotation axis "A"; this sliding makes the jaws or hooks 203 clamp on the edges of the rim of the wheel previously placed on the platform 1 by the operator, clamping it firmly.

In this movement, each clamping member 3 is pushed individually by the sliding of the respective roller 14 into the corresponding through slot 10 and, therefore, the rotation of the flat body 9 makes all the sliding of the through slots 10 on the rollers 14 equal to one another: this enables delays to be avoided between the sliding of all the clamping members 3 along the grooves 8 or differences in clamping force therebetween to be avoided, which are determined by different final clamping positions of the jaws or hooks 203 along the grooves 8.

In order to release a clamped wheel, the operator conducts the opposite manoeuvre to the one for divaricating the clamping members 3 and commands the hydraulic cylinders 16 in order that they are progressively arranged in a retracted configuration as in Figure 1: the latter rotates in an opposite direction to the previous one the flat body 9 and the slots 10 slide on the rollers 14, pushing them to the first ends 11 facing outside.

When the rollers 14 have reached the first ends 11, the jaws or hooks 203 are in the maximum dilation position and the operator can remove the wheel from the platform 1.

In the second embodiment of the clamping apparatus 2 illustrated in Figure 8, clamping a wheel on the platform 1 occurs by sliding the jaws or hooks 203 along the grooves 8, as disclosed in the preceding first embodiment of the clamping apparatus 2.

The difference with respect to the latter consists of the fact that the sliding of the jaws or hooks 203 occurs by means of the thrusts supplied simultaneously by all hydraulic cylinders 51 that, by means of the respective pistons 52, move each jaw or hook 203 to the outside of the platform 1, to a divaricated position in which it is possible to rest a wheel to be clamped on the platform 1 and, move them all in a direction opposite the preceding one, making them converge on the rotation axis "A" of the platform 1, until the jaws or hooks 203 come into contact with the rim edge of the wheel, clamping it on the platform 1.

## Claims

1. Clamping apparatus (2), comprising a resting plane for resting bodies to be clamped; clamping members (3), alternatively slidable all together on said plane between a clamping position and a release position; conducting means (4) of said clamping members (3) **characterised in that** said conducting means (4) comprises: a common rotating element (5) rotating alternatively in two opposite directions and engaged with said clamping members (3); rotating drive means (6) connected to said common rotating element (5).

2. Clamping apparatus (2), comprising a resting plane for resting bodies to be clamped; clamping members (3), alternatively slidable all together on said plane between a clamping position and a release position; conducting means (4) of said clamping members (3) **characterised in that** said conducting means (4) comprises respective single actuating means (50) for each clamping member of said clamping members (3).

3. Clamping apparatus (2) according to claim 2, and further comprising a common rotating element (5) rotating alternatively in two opposite directions and engaged with said clamping members (3).

4. Clamping apparatus (2) according to any one of claims 1 to 3, wherein said resting plane is provided with guide means (7) for guiding said clamping members (3).

5. Clamping apparatus (2) according to claim 4, wherein said guide means (7) comprises rectilinear grooves (8) obtained on said resting plane, having the longitudinal axes (B) converging on a convergence point, each clamping member of said clamping members (3) being slidable in a respective rectilinear groove (8).

6. Clamping apparatus (2) according to claim 1, or 3, or according to claim 4 or 5 as claim 4 is appended to claim 1 or 3, wherein said common rotating element (5) comprises: a flat body (9) arranged with rotation axis (A) perpendicular to said resting plane and placed parallel below the latter; a plurality of through slots (10) obtained in said flat body (9), having first ends (11) and second ends (12), both closed and arranged so as to have said first ends (11) converging on said rotation axis (A) and said second ends (12) diverging from the latter; engaging means (13) slidable in said through slots (10), coupled with each clamping member of said clamping members (3).

7. Clamping apparatus (2) according to claim 6, wherein said through slots (10) are arc-shaped.

8. Clamping apparatus (2) according to claim 7, wherein said through slots (10) have the respective convex parts facing outside said resting plane.

9. Clamping apparatus (2) according to any one of claims 6 to 8, wherein, in a view that is orthogonal to said flat body (9), each of said first ends (11) of a slot (10) is aligned on each of said second ends (12) of a contiguous slot (10) in a direction that is radial with respect to said rotation axis (A) of said flat body (9).

10. Clamping apparatus according to claim 9, wherein said radial direction coincides with a direction of a rectilinear groove of said rectilinear grooves (8).

11. Clamping apparatus (2) according to any one of claims 1 to 10, wherein said clamping members (3) each comprises a jaw (203).

12. Clamping apparatus (2) according to claim 11, as appended to claim 5, wherein the jaws (203) are mounted coupled with slide bases (103) that are slidable along said rectilinear grooves (8).

13. Clamping apparatus (2) according to any one of claims 6 to 10, or according to claim 11 or 12 as claim 11 is appended to any one of claims 6 to 10, wherein said flat body (9) is a disc.

14. Clamping apparatus (2) according to claim 6, wherein said engaging means (13) comprises for each clamping member (3): a freely rotatable roller (14); a support pivot (15) of said roller (14) on said clamping member (3), extending from a lower zone of the latter, said roller (14) being engaged in a respective through slot (10) and arranged to slide inside the latter during rotation of said flat body (9).

15. Clamping apparatus (2) according to any one of claims 1 to 14, wherein said resting plane comprises a rotatable platform (1) of a tyre-removing machine.

16. Tyre-removing machine **characterised in that** it is provided with a clamping apparatus (2) according to any one of claims 1 to 15.
